# EUROPÄISCHE PATENTANMELDUNG

(11) **EP 2 026 545 A2**
(43) Veröffentlichungstag der Anmeldung: **18.02.2009**
(21) Anmeldenummer: 08014245.8
(22) Anmeldetag: 08.08.2008
(51) Int. Cl.: H04M 1/725

(54) **Vorrichtung zum senden einer Notfallinformation**

(30) Priorität: 16.08.2007 DE 102007038698
(71) Anmelder: Björn Steiger Stiftung Service GmbH, 70174 Stuttgart (DE)
(72) Erfinder: Holzer, Harald, 76698 Ubstadt-Weiher (DE)
(74) Vertreter: Zinkler, Franz

(57) **Zusammenfassung**

Eine Vorrichtung (100) zum Senden einer Notfallinformation, die weniger als 10 Tasten aufweist. Die Vorrichtung (100) umfasst eine Einrichtung (110) zum Übertragen von Daten in einem Mobilfunknetz und eine Einrichtung (120) zum Bereitstellen von Lokalisierungsdaten auf deren Basis eine Position der Vorrichtung (100) ermittelbar ist. Die Vorrichtung (100) umfasst ferner eine Einrichtung (130) zum Empfangen eines Notfallindikators, die einer Taste (140) entspricht, wobei die Einrichtung (130) zum Empfangen ferner angepasst ist, um basierend auf dem Notfallindikator eine Übertragung der Lokalisierungsdaten auszulösen.

## Beschreibung

Die vorliegende Erfindung bezieht sich auf den Bereich der Handhabung von Notrufen sowie auf die Alarmierung von Rettungskräften.

In Notsituationen ist es unabdingbar, schnelle und kompetente Hilfe an den Ort des Notgeschehens zu bringen. Derzeitige Konzepte zur Alarmierung von Rettungsdiensten und zur Durchführung von Notrufen sehen vor, dass ein in Not Geratener oder ein Zeuge des Notgeschehens, zumeist über Notrufnummern wie beispielsweise 110 oder 112 in Deutschland, eine Verbindung zu einer Rettungsleitstelle herstellt, um diese zu verständigen. Die Rettungsleitstelle nimmt dann Informationen über den Notfall auf, alarmiert und informiert die Rettungskräfte entsprechend. Dabei sollte der Initiator des Notrufes vielfältige Informationen, hinsichtlich des Ortes des Geschehens, des Hergangs des Geschehens, der Art des Notfalls, beziehungsweise der Art der Verletzung, die Anzahl der Beteiligten usw. bereithalten, um eine optimale Hilfeleistung zu ermöglichen.

Konventionelle Konzepte erweisen sich als nachteilig in solchen Notfällen, wo es keine Zeugen oder direkte Hilfeleistenden gibt, wie es beispielsweise häufig bei alleinstehenden Menschen vorkommt. Konventionelle Konzepte bieten häufig nicht die Möglichkeit, einen Notruf abzusetzen, wenn ein Mensch erst einmal in eine Notsituation, wie beispielsweise nach einem Sturz, Unfall usw., geraten ist. Ferner weisen diese Konzepte Nachteile auf, wenn der in Not Geratene nicht mehr in der Lage ist, seine Not, seine Position usw. mitzuteilen.

Ferner wirken sich die immer komplexer werdenden Kommunikationsmittel nachteilig aus, da diese gerade in Notfallsituationen schwierig bedienbar werden. Beispielsweise sind Tastaturen oder Menüsteuerungen von Mobilfunkendgeräten bereits unter normalen Umständen kompliziert zu bedienen, was durch die vielfältigen Funktionalitäten erforderlich gemacht wird.

Es ist Aufgabe der vorliegenden Erfindung, ein verbessertes Konzept zum Senden von Notfallinformationen zu schaffen.

Diese Aufgabe wird gelöst durch eine Vorrichtung zum Senden einer Notfallinformation gemäß Anspruch 1 und ein Verfahren zum Senden einer Notfallinformation gemäß Anspruch 14.

Ausführungsbeispiele schaffen eine Vorrichtung zum Senden einer Notfallinformation, die weniger als 10 Tasten aufweist mit einer Einrichtung zum Übertragen von Daten in einem Mobilfunknetz und einer Einrichtung zum Bereitstellen von Lokalisationsdaten, auf deren Basis eine Position der Vorrichtung ermittelbar ist. Ferner umfasst die Vorrichtung eine Einrichtung zum Empfangen eines Notfallindikators, die einer Taste entspricht, und die ferner angepasst ist, um basierend auf dem Notfallindikator eine Übertragung der Lokalisierungsdaten auszulösen.

Der Kerngedanke der vorliegenden Erfindung liegt in der Erkenntnis, dass das Senden einer Notfallinformation erheblich erleichtert werden kann, wenn beispielsweise Lokalisierungsdaten automatisiert per Knopfdruck an eine Rettungsleitstelle gesendet werden können und ein Endgerät, beispielsweise Mobilfunkendgeräte, wesentlich einfacher gestaltet werden kann, wenn die Hauptfunktionalität das Absetzen eines Notrufes ist. In einem Ausführungsbeispiel könnte ein Mobilfunktelefon mit einem einzigen Knopf zum Einsatz kommen. In einem Ausführungsbeispiel entspräche dies einem Mobilfunkendgerät, mit einer Notruftaste, die entsprechend groß und einfach in der Handhabung ausgeführt ist, und auf deren Aktivierung hin ein Notruf abgesendet wird. Als Lokalisierungsdaten könnten beispielsweise GPS-Koordinaten (GPS = Global Positioning System) über eine Datenverbindung an eine Rettungsleitstelle gesendet werden.

Ausführungsbeispiele bieten somit insbesondere für Kranke und ältere Menschen den Vorteil, dass sie in ihrer Handhabung sehr einfach sind, und ein Notruf, der Identifikations- und Lokalisierungsdaten enthalten kann, mit oder auch ohne Sprachverbindung abgesetzt werden kann. Insbesondere nach Stürzen, Unfällen, usw. können Ausführungsbeispiele durch die vereinfachte Durchführbarkeit eines Notrufes enorm dazu beitragen, Leben zu retten.

Ein Ausführungsbeispiel der vorliegenden Erfindung wird anhand der beiliegenden Figur näher erläutert.

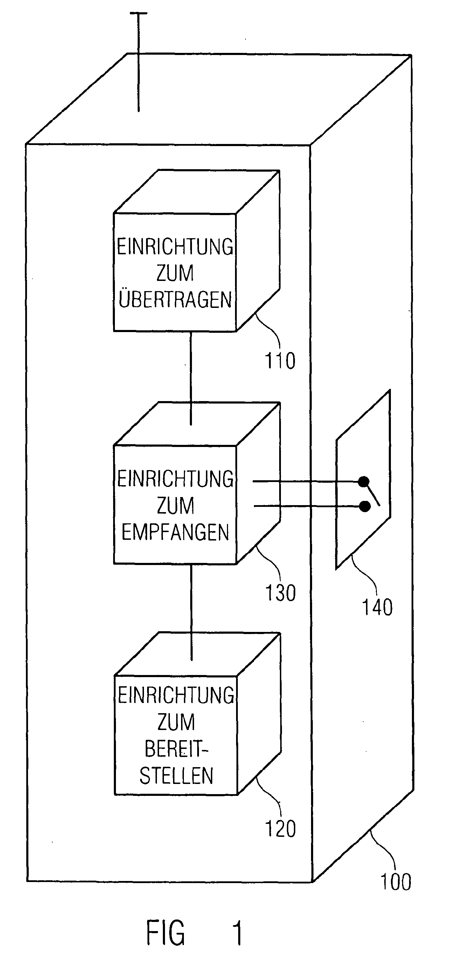

Fig. 1 zeigt ein Ausführungsbeispiel einer Vorrichtung zum Senden einer Notfallinformation.

Fig. 1 zeigt ein Ausführungsbeispiel einer Vorrichtung 100 zum Senden einer Notfallinformation, die weniger als 10 Tasten aufweist. Die Vorrichtung 100 umfasst eine Einrichtung 110 zum Übertragen von Daten in einem Mobilfunknetz und eine Einrichtung 120 zum Bereitstellen von Lokalisierungsdaten auf deren Basis eine Position der Vorrichtung 100 ermittelbar ist. Die Vorrichtung 100 umfasst ferner eine Einrichtung 130 zum Empfangen eines Notfallindikators, die einer Taste 140 entspricht, wobei die Einrichtung 130 zum Empfangen ferner angepasst ist, um basierend auf dem Notfallindikator eine Übertragung der Lokalisierungsdaten auszulösen.

In Ausführungsbeispielen kann die Taste 140, die der Einrichtung 130 zum Empfangen des Notfallindikators entspricht, mehr als 10% der Oberfläche der Vorrichtung einnehmen. In Ausführungsbeispielen kann die Taste 140 demnach so ausgelegt sein, dass beispielsweise ein kranker, alter oder auch verletzter Mensch diese leicht betätigen kann. Ausführungsbeispiele können dabei auch ohne eine Anzeige auskommen, in Ausführungsbeispielen kann ein Notruf, also das Senden einer Notfallinformation, auch durch reines Ertasten und Betätigen der Taste 140 durchgeführt werden.

In anderen Ausführungsbeispielen kann die Einrichtung 110 zum Übertragen ferner ausgebildet sein, um basierend auf dem Notfallindikator ferner einen Sprachkanal oder eine Sprachverbindung zu einer Rettungsleitstelle aufzubauen. Ausführungsbeispiele erleichtern somit den Aufbau eines Notrufs, insbesondere dann, wenn ein in Not Geratener nicht mehr in der Lage ist, ein Telefon oder ein Mobiltelefon zu bedienen. Der Notruf kann in Ausführungsbeispielen beispielsweise durch einmaliges Betätigen der Taste 140 erfolgen. In Ausführungsbeispielen können sowohl Notfallinformationen an eine Rettungsleitstelle gesendet werden, als auch eine Sprachverbindung zu der Rettungsleitstelle basierend auf dem Betätigen der Taste 140 aufgebaut werden. In weiteren Ausführungsbeispielen kann zur Vermeidung von Fehlalarmen eine weitere Taste als Sicherungstaste eingesetzt werden. Ein Notruf würde in solchen Ausführungsbeispielen nur dann abgesetzt werden, wenn die Sicherungstaste und die Taste 140 gleichzeitig betätigt werden. Ausführungsbeispiele können zur Vermeidung von Fehlalarmen auch andere elektrische oder mechanische Sicherungen aufweisen, die das einfache und sichere Auslösen eines Notrufes allerdings nicht erschweren.

In weiteren Ausführungsbeispielen kann die Vorrichtung 100 ferner eine Einrichtung zum Bestätigen einer erfolgreichen Übertragung der Lokalisierungsdaten aufweisen. Die Bestätigung kann dabei durch ein optisches, ein akustisches oder ein mechanisches Signal erfolgen. Die Einrichtung zum Bestätigen kann dabei auch ausgebildet sein, um von der Rettungsleitstelle eine Bestätigung zu erhalten. Diese Bestätigung kann beispielsweise verifizieren, dass Rettungskräfte unterwegs sind. Ferner ist es in Ausführungsbeispielen auch denkbar, einem in Not Geratenen wiederholt Bestätigungen zu übermitteln, beispielsweise in Form von Kurznachrichten oder Sprachnachrichten oder auch einer automatisiert erzeugten Sprachverbindung. Dabei kann die Vorrichtung 100 auch ausgebildet sein, um über eine Freisprecheinrichtung, wie beispielsweise einen integrierten Lautsprecher, der Rettungsleitstelle nach Absetzen des Notrufs automatisiert die Möglichkeit zu geben, dem in Not Geratenen akustische Nachrichten zu übermitteln. Somit kann eine Rettungsleitstelle zumindest versuchen einem in Not Geratenen beispielsweise mitzuteilen, wie lange es noch dauernd wird, bis Hilfe eintrifft. In Ausführungsbeispielen kann somit ein in Not Geratener, der beispielsweise verschüttet wurde und die Taste 140 betätigt hat, ein Signal, beispielsweise in Form eines Signaltones oder eines Vibrationsalarms, Sprachnachrichten, Textnachrichten oder dergleichen, also Bestätigungen des Notrufes erhalten. Ausführungsbeispiele können somit gerade in Momenten akuter Not über das Bestätigungssignal eine große mentale Hilfe für den in Not Geratenen bieten.

In Ausführungsbeispielen kann die Einrichtung 120 zum Bereitstellen von Lokalisierungsdaten ausgebildet sein, um die Lokalisierungsdaten aus Empfangspegelmessungen oder den Signalen umliegender Basisstationen eines Mobilfunksystems zu erzeugen. In anderen Ausführungsbeispielen kann die Einrichtung 120 ferner über eine Verbindung zu einem GPS-Empfänger verfügen, über die die Lokalisierungsdaten, sprich die GPS-Koordinaten, übermittelt werden. Generell sind jegliche Konzepte denkbar, die zur Ortung des Mobilfunkendgerätes ausführbar sind, bzw. jegliche Lokalisierungsdaten sind denkbar, aus denen die Position des Mobilfunkendgerätes ermittelbar ist. Ausführungsbeispiele bieten den Vorteil, dass Lokalisierungsdaten bereitgestellt werden, die im Falle eines Notrufs übermittelt werden können.

In Ausführungsbeispielen kann die Einrichtung 110 zum Übertragen ausgebildet sein, um entsprechend eines oder mehrerer Mobilfunkstandards zu kommunizieren. Ferner kann die Einrichtung 110 zum Übertragen ausgebildet sein, um bei verschiedenen Frequenzen, Zugriffsverfahren, usw. zu agieren. Beispielsweise könnte die Einrichtung 110 zum Übertragen 100 einen GSM-Sender (GSM = Global System for Mobil Communication), einen UMTS-Sender (UMTS = Universal Mobil Telecommunication System), einen LTE-Sender (LTE = Long Term Evolution), einen WLAN-Sender (WLAN = Wireless Local Area Network), einen DECT-Sender (DECT = Digital Enhanced Cordless Telephone), usw. aufweisen. In Ausführungsbeispielen mit Aufbau einer Sprachverbindung können entsprechende Sende-Empfänger vorhanden sein. Ferner kann die Einrichtung 110 zum Übertragen ausgebildet sein, um die Lokalisierungsdaten über verschiedene Datendienste zu übermitteln. Beispielsweise wären Übertragungen über SMS (SMS = Short Message Service), MMS (MMS = Multi Media Short Messages), über E-Mail oder auch per Fax möglich. In Ausführungsbeispielen sind beliebige Datenkanäle denkbar, sowie auch Multistandard-Ausführungsbeispiele, das heißt, Ausführungsbeispiele in denen die Einrichtung 110 zum Übertragen ausgebildet ist, um gemäß mehrerer Standards oder Frequenzen oder Zugriffstechnologien zu kommunizieren.

In einem Ausführungsbeispiel umfasst die Vorrichtung 100 einen GSM-Sende-Empfänger, einen GPS-Empfänger, eine Taste 140, sowie optional ein Mikrophon und einen Lautsprecher. In diesem Ausführungsbeispiel können nach Betätigen der Taste 140 eine GSM-Datenverbindung zu einer Rettungsleitstelle aufgebaut und die über den GPS-Empfänger ermittelten Koordinaten übertragen werden. Optional kann in einem anderen Ausführungsbeispiel gleichzeitig eine Sprachverbindung über GSM zu der Rettungsleitstelle hergestellt werden. Beispielsweise könnte basierend auf dem Notfallindikator, also auf das Betätigen der Taste 140 hin, die GPS-Koordinaten über eine SMS an eine Rettungsleitstelle geschickt werden.

In anderen Ausführungsbeispielen kann die Vorrichtung 100 ausgelegt sein, um zusätzlich zu den Lokalisierungsdaten Zusatzinformationen zu übertragen. Die Zusatzinformationen können beispielsweise Vitalparameter oder medizinische Daten des in Not Geratenen umfassen. Beispielsweise wäre es besonders bei kranken Menschen denkbar, dass über entsprechende Datenerfassungsgeräte Vitalparameter oder medizinische Werte kontinuierlich überwacht werden. Sollte ein solcher Patient in Not geraten, so können Ausführungsbeispiele die Möglichkeit bieten, entsprechende Vitalparameter oder aktuell erfasste medizinische Daten mit an die Rettungsleitstelle zu übertragen, was wiederum zur besseren Vorbereitung der Rettungskräfte beitragen kann. In Ausführungsbeispielen kann die Vorrichtung 100 auch ausgebildet sein, um nach Auslösen des Notrufs mit einem Datenerfassungsgerät zur Erfassung von Vitalparametern zu kommunizieren. In Ausführungsbeispielen ist es denkbar, dass ein Adressat des Notrufs, beispielsweise ein Arzt oder eine Rettungsleitstelle, eine Verbindung zu dem Datenerfassungsgerät über die Vorrichtung 100 aufbaut, um so gezielt Vitaldaten auszulesen oder auch um das Datenerfassungsgerät oder auch ein medizinisches Hilfsgerät, wie z.B. Medikamentendosierer, abgestimmt auf die Notfallsituation zu konfigurieren. Beispielsweise wäre in einem Ausführungsbeispiel denkbar, dass auf die beschriebene Art eine Insulinpumpe eines Diabetespatienten automatisiert gesteuert bzw. umkonfiguriert wird. Dies kann beispielsweise auf der Grundlage weiterer übermittelter Vitalparameter geschehen. Eine Kommunikation zwischen Ausführungsbeispielen und anderen Datenerfassungsgeräten, wie beispielsweise GPS-Empfängern oder medizinischen Datenerfassungsgeräten könnte z.B. über Bluetooth erfolgen.

In weiteren Ausführungsbeispielen wäre es denkbar, dass die Vorrichtung 100 ferner eine Einrichtung zur Nahfeld-Ortung aufweist. Insbesondere in Anwendungsbereichen, in denen Verschüttungen, wie beispielsweise bei Lawinen auftreten können, können Ausführungsbeispiele einen erheblichen Vorteil bieten, wenn Rettungskräfte, die über die oben beschriebenen Mechanismen bereits in die Nähe gelangt sind, über ein weiteres Signal eine Fein- oder Nahfeld-Ortung vornehmen können. Beispielsweise können dabei Funksignale oder auch akustische Signale ausgesendet werden. Insbesondere im Bereich der Lawinenverschüttung können Ausführungsbeispiele so überlebenswichtige zusätzliche Zeit gewinnen.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette, DVD, oder einer CD mit elektronischen auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode durch Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode durch Durchführung des Verfahrens realisiert werden, wenn das Computerprogrammprodukt auf einem Computer abläuft.

### Bezugszeichenliste

- 100: Vorrichtung zum Senden von Notfallinformationen
- 110: Einrichtung zum Übertragen
- 120: Einrichtung zum Bereitstellen
- 130: Einrichtung zum Empfangen
- 140: Taste

## Patentansprüche

1. Vorrichtung (100) zum Senden einer Notfallinformation, die weniger als 10 Tasten aufweist, mit folgenden Merkmalen
einer Einrichtung (110) zum Übertragen von Daten in einem Mobilfunknetz;
einer Einrichtung (120) zum Bereitstellen von Lokalisierungsdaten auf deren Basis eine Position der Vorrichtung (100) ermittelbar ist; und
einer Einrichtung (130) zum Empfangen eines Notfallindikators, die einer Taste (140) entspricht, wobei die Einrichtung (130) zum Empfangen ferner angepasst ist, um basierend auf dem Notfallindikator eine Übertragung der Lokalisierungsdaten auszulösen.

2. Vorrichtung (100) gemäß Anspruch 1, bei der die Taste (140), die der Einrichtung (130) zum Empfangen des Notfallindikators entspricht, mehr als 10% der Oberfläche der Vorrichtung (100) einnimmt.

3. Vorrichtung (100) gemäß einem der Ansprüche 1 oder 2, bei der die Einrichtung (110) zum Übertragen ausgebildet ist, um basierend auf dem Notfallindikator ferner einem Sprachkanal zu einer Rettungsleitstelle aufzubauen.

4. Vorrichtung (100) gemäß einem der Ansprüche 1 bis 3, die ferner eine Einrichtung zum Bestätigen einer erfolgreichen Übertragung der Lokalisierungsdaten aufweist.

5. Vorrichtung (100) gemäß Anspruch 4, bei der die Einrichtung zum Bestätigen ausgebildet ist, um ein optisches, ein akustisches oder ein mechanisches Signal als Bestätigung auszugeben.

6. Vorrichtung (100) gemäß einem der Ansprüche 1 bis 5, bei der die Einrichtung (120) zum Bereitstellen ausgebildet ist, um Koordinaten bereitzustellen, die aus empfangbaren Basisstationssignalen ermittelbar sind.

7. Vorrichtung (100) gemäß einem der Ansprüche 1 bis 6, bei der die Einrichtung (120) zum Bereitstellen ausgebildet ist, um GPS-Koordinaten zu ermitteln.

8. Vorrichtung (100) gemäß einem der Ansprüche 1 bis 7, bei der die Einrichtung (110) zum Übertragen ausgebildet ist, um in dem Mobilfunknetz gemäß GSM, UMTS, LTE, WLAN oder DECT zu kommunizieren.

9. Vorrichtung (100) gemäß einem der Ansprüche 1 bis 8, bei der die Einrichtung (110) zum Übertragen ausgebildet ist, um die Lokalisierungsdaten über eine SMS, eine MMS, eine E-Mail oder ein Fax zu übertragen.

10. Vorrichtung (100) gemäß einem der Ansprüche 1 bis 9, die ferner einen GSM-Sende-Empfänger und einen GPS-Empfänger umfasst.

11. Vorrichtung (100) gemäß Anspruch 10, die ausgebildet ist, um basierend auf dem Notfallindikator GPS-Koordinaten über eine SMS an eine Rettungsleitstelle zu übertragen und ferner eine Sprachverbindung mit der Rettungsleitstelle aufzubauen.

12. Vorrichtung (100) gemäß einem der Ansprüche 1 bis 11, die ferner ausgebildet ist, um zusätzlich Vitalparameter oder medizinische Daten als Notfallinformation zu übertragen.

13. Vorrichtung (100) gemäß einem der Ansprüche 1 bis 12, die ferner eine Einrichtung zum Bereitstellen eines elektrischen oder akustischen Nahfeld-Ortungssignals umfasst.

14. Verfahren zum Senden einer Notfallinformation mit folgenden Schritten:
Bereitstellen von Lokalisierungsdaten auf deren Basis eine Position ermittelbar ist;
Empfangen eines Notfallindikators; und
Auslösen einer Übertragung der Lokalisierungsdaten ansprechend auf den Notfallindikator.

15. Computerprogramm mit einem Programmcode zur Durchführung des Verfahrens gemäß Anspruch 14, wenn der Programmcode auf einem Computer ausgeführt wird.
